# EUROPÄISCHE PATENTSCHRIFT

(11) **EP 1 539 439 B1**
(45) Veröffentlichungstag und Bekanntmachung des Hinweises auf die Patenterteilung: **21.12.2005**
(21) Anmeldenummer: 03798107.3
(22) Anmeldetag: 19.08.2003
(51) Int. Cl.: B26B 19/28, H02K 5/04, H02K 33/12

(54) **ELEKTRISCHES KLEINGERÄT MIT EINER ANTRIEBSEINRICHTUNG ZUR ERZEUGUNG EINER OSZILLIERENDEN BEWEGUNG**
SMALL ELECTRICAL APPLIANCE WITH A DRIVE DEVICE FOR GENERATION OF AN OSCILLATING MOVEMENT
PETIT ELECTROMENAGER COMPRENANT UN DISPOSITIF D'ENTRAINEMENT DESTINE A PRODUIRE UN MOUVEMENT OSCILLATOIRE

(30) Priorität: 11.09.2002 DE 10242091
(43) Veröffentlichungstag der Anmeldung: 15.06.2005
(73) Patentinhaber: Braun GmbH, 61476 Kronberg (DE)
(72) Erfinder: KRAUS, Bernhard, 35619 Braunfels (DE); KLÖS, Alexander, 65719 Hofheim (DE)
(86) Internationale Anmeldenummer: PCT/EP2003/009152
(87) Internationale Veröffentlichungsnummer: WO 2004/028759

(56) Entgegenhaltungen:
- EP-A- 1 162 721
- EP-A- 1 193 844
- DE-A- 1 463 988

## Beschreibung

Die Erfindung betrifft ein elektrisches Kleingerät mit einer Antriebseinrichtung zur Erzeugung einer oszillierenden Bewegung. Bei dem Kleingerät kann es sich insbesondere um einen elektrischen Rasierer oder eine elektrische Zahnbürste handeln.

Aus der DE 1 151 307 A ist ein Schwingankerantrieb für Trockenrasiergeräte mit hin- und hergehender Arbeitsbewegung eines Schermessers bekannt. Der bekannte Schwingankerantrieb weist einen mit dem Gehäuse des Rasiergeräts fest verbundenen und U-förmig ausgebildeten Elektromagneten auf. In der Nähe der Pole des Elektromagneten sind ein Arbeitsanker und beiderseits des Arbeitsankers massensymmetrisch je ein schwingfähiger Ausgleichsanker angeordnet. Der Arbeitsanker und die Ausgleichsanker sind jeweils mittels einer U-förmigen Blattfeder beweglich aufgehängt. Im Betriebszustand schwingt der Arbeitsanker, der das Schermesser antreibt, parallel zu den Polflächen des feststehenden Elektromagneten, wobei die Ausgleichsanker eine dazu gegenphasige Schwingbewegung ausführen, um eine Übertragung der Schwingungen des Arbeitsankers auf das Gehäuse des Rasiergeräts möglichst zu verhindern.

Die DE 196 80 506 T1 offenbart einen elektrischen Rasierapparat mit einem oszillierenden Linearmotor, der einen stationären Elektromagneten und mehrere bewegliche Komponenten aufweist, die mit Hilfe des Elektromagneten in zueinander gegenphasige Schwingungsbewegungen versetzt werden. Der Elektromagnet ist fest mit dem Chassis des Rasierapparats verschraubt. Die beweglichen Komponenten sind über eine Blattfeder beweglich am Chassis aufgehängt. Die Blattfeder ist mehrfach geschlitzt, so daß sich die einzelnen Komponenten in zueinander entgegengesetzte Richtungen bewegen können.

Der Erfindung liegt die Aufgabe zugrunde, bei einem elektrischen Kleingerät auf möglichst optimale Weise eine oszillierende Bewegung zu erzeugen und die Entstehung unerwünschter Gerätevibrationen möglichst zu vermeiden.

Diese Aufgabe wird durch die Merkmalskombination gemäß Anspruch 1 gelöst.

Das erfindungsgemäße elektrisches Kleingerät verfügt über eine Antriebseinrichtung zum Erzeugen einer oszillierenden Bewegung wenigstens einer Arbeitseinheit des elektrischen Kleingeräts. Die Antriebseinrichtung weist eine erste Antriebskomponente, eine zweite Antriebskomponente und eine Spule zur Ausbildung eines Magnetfelds auf, das von der ersten Antriebskomponente ausgeht und auf die zweite Antriebskomponente, die beweglich im elektrischen Kleingerät angeordnet ist, derart einwirkt, daß die zweite Antriebskomponente in eine oszillierende Bewegung versetzt wird. Die Erfindung zeichnet sich dadurch aus, daß die erste Antriebskomponente zur Ausführung einer zur zweiten Antriebskomponente gegenphasig oszillierenden Bewegung beweglich im elektrischen Kleingerät angeordnet ist und daß die Antriebseinrichtung mittels wenigstens eines ersten Federelements am elektrischen Kleingerät befestigt ist.

Dadurch, daß die zwei Antriebskomponenten gegenphasig zueinander schwingen wird eine wesentlich höhere Relativgeschwindigkeit zwischen den Antriebskomponenten erzielt als bei einem herkömmlichen Antrieb, bei dem sich nur eine Antriebskomponente bewegt und die andere Antriebskomponente ruht. Da der Wirkungsgrad bei derartigen Antrieben mit der Relativgeschwindigkeit der Antriebskomponenten zueinander zunimmt, lassen sich mit der erfindungsgemäßen Antriebseinrichtung höhere Wirkungsgrade erreichen als mit vergleichbaren bekannten Antrieben. Die Aufhängung mittels eines Federelements hat den Vorteil, daß sie zum einen nahezu reibungsfrei ist und zum anderen die restlichen Bestandteile des Kleingeräts, insbesondere das Gehäuse, schwingungsmäßig von der Antriebseinrichtung weitgehend abkoppelt.

Die erste Antriebskomponente und die zweite Antriebskomponente können mittels wenigstens eines zweiten Federelements miteinander verbunden sein. Dies hat den Vorteil, daß eine weitgehend reibungsfreie Relativbewegung zwischen den beiden Komponenten ermöglicht wird. Gleichzeitig werden dadurch auch die für den Betrieb der Antriebseinrichtung benötigten Rückstellkräfte erzeugt. Die Federkonstante des zweiten Federelements ist vorzugsweise größer als die Federkonstante des ersten Federelements. Dadurch wird zum einen eine relativ straffe Kopplung der beiden Komponenten untereinander und zum anderen eine relativ lockere Kopplung der Antriebseinrichtung an das Gehäuse des Kleingeräts ermöglicht.

Im bevorzugten Ausführungsbeispiel des erfindungsgemäßen Kleingeräts ist das erste und/oder das zweite Federelement als Blattfeder ausgebildet. Eine Blattfeder ist nur bzgl. einer Raumrichtung elastisch nachgiebig ausgebildet. Bzgl. der beiden anderen Raumrichtungen verhält sie sich wie ein starrer Körper und kann somit in diesen Raumrichtungen zusätzlich statische Funktionen übernehmen. Weitere Vorteile der Blattfeder bestehen darin, daß sie extrem wenig Bauraum beansprucht und kostengünstig verfügbar ist.

Das erste und das zweite Federelement können als eine integrale Einheit ausgebildet sein. Dadurch kann die Anzahl der Einzelteile des erfindungsgemäßen Kleingeräts reduziert werden. Insbesondere können das erste Federelement und das zweite Federelement als eine gemeinsame Blattfeder in Form eines Kreuzes ausgebildet sein.

Die zweiten Federelemente können stapelförmig übereinander angeordnet sein. Dies hat den Vorteil, daß sich sehr hohe Federkonstanten und damit eine sehr starke Kopplung der beiden Antriebskomponenten realisieren lassen. Um die Reibung möglichst gering zu halten ist es dabei von Vorteil, die zweiten Federelemente durch Zwischenstücke auf Abstand zueinander gehalten werden.

Zur Festlegung einer Ruheposition der Antriebseinrichtung kann ein drittes Federelement vorgesehen sein.

In einem bevorzugten Ausführungsbeispiel bewegen sich die Massenschwerpunkte der ersten Antriebskomponente und der zweiten Antriebskomponente inklusive sich mit der ersten Antriebskomponente oder der zweiten Antriebskomponente mitbewegender Bauteile auf einer gemeinsamen Geraden. Dadurch wird verhindert, daß ein resultierender Drehimpuls erzeugt wird. Weiterhin wird die Antriebseinrichtung vorzugsweise so ausgebildet, daß die linearen Impulse der ersten Antriebskomponente und der zweiten Antriebskomponente inklusive sich mit der ersten Antriebskomponente oder der zweiten Antriebskomponente mitbewegender Bauteile entgegengesetzt gleich sind, so daß kein resultierender linearer Impuls erzeugt wird. Durch diese Maßnahmen ist es möglich, das zweite Federelement sehr schwach zu dimensionieren und damit eine nahezu vollständige Entkopplung der Antriebseinrichtung vom Gehäuse des Kleingeräts zu erreichen.

Wenigstens eine der beiden Antriebskomponenten kann einen oder mehrere Dauermagnete aufweisen. Weiterhin kann wenigstens eine der beiden Antriebskomponenten einen Wickelkern aufweisen, auf dem die Spule angeordnet ist. Damit läßt sich bei relativ geringen Abmessungen ein leistungsstarker Antrieb realisieren, dessen Stromaufnahme ausreichend gering ist, um beispielsweise einen Akku-Betrieb des elektrischen Kleingeräts zuzulassen.

Die Erfindung wird nachstehend an Hand der in der Zeichnung dargestellten Ausführungsbeispiele erläutert. Die Ausführungsbeispiele beziehen sich jeweils auf einen elektrischen Rasierer. Die Erfindung eignet sich aber auch für andere elektrische Kleingeräte wie beispielsweise eine elektrische Zahnbürste.

Es zeigen
- Fig. 1: ein stark schematisiertes Ausführungsbeispiel eines Antriebssystems des erfindungsgemäßen Rasierers in Schnittdarstellung,
- Fig. 2: eine stark schematisierte Teilansicht des erfindungsgemäßen Rasierers mit dem in Fig. 1 dargestellten Ausführungsbeispiel des Linearmotors,
- Fig. 3: ein Ausführungsbeispiel für eine Blattfeder im eingebauten Zustand in Seitenansicht,
- Fig. 4: eine perspektivische Teilansicht eines Ausführungsbeispiels des erfindungsgemäßen Rasierers, wobei ein Fig. 2 entsprechender Ausschnitt dargestellt ist,
- Fig. 5: eine Fig. 4 entsprechende Darstellung, wobei allerdings einige Abdeckungen entfernt sind, so daß mehr Einzelheiten sichtbar sind und
- Fig. 6: das Ausführungsbeispiel aus Fig. 5 in einer perspektivischen Explosionsdarstellung.

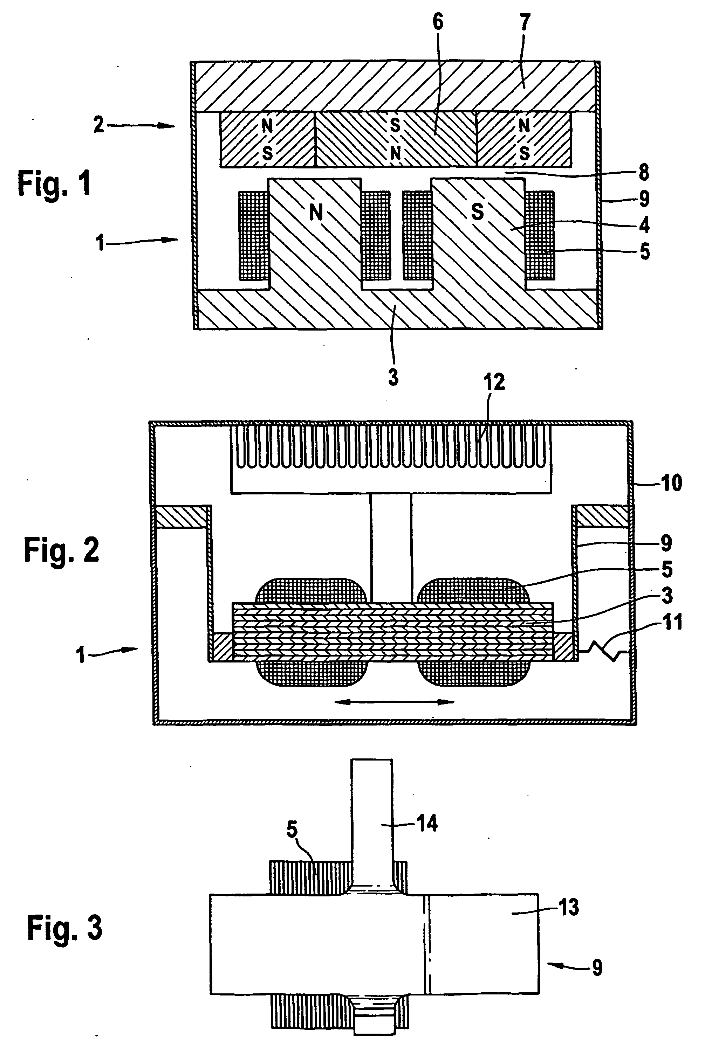

Fig. 1 zeigt ein stark schematisiertes Ausführungsbeispiel eines Antriebssystems des erfindungsgemäßen Rasierers in Schnittdarstellung. Das Antriebssystem des Rasierers ist als oszillierender Linearmotor ausgebildet, der zwei bewegliche Motorkomponenten 1 und 2 aufweist, die in einem geringen Abstand zueinander angeordnet sind. Die erste Motorkomponente 1 besteht aus einem Eisenkern 3, der zwei sich in Richtung der zweiten Motorkomponente 2 erstreckende Schenkel 4 aufweist. Auf jedem Schenkel 4 ist eine aus Draht gewickelte Spule 5 angeordnet, wobei die Spulen 5 als separate Einzelspulen oder als eine gemeinsame Spule betrieben werden können. Die zweite Motorkomponente 2 weist drei Dauermagnete 6 auf, die jeweils mit antiparallel orientierter Polung nebeneinander auf einer gemeinsamen Trägerplatte 7 angeordnet sind, so daß jeweils einer der Magnetpole zum Eisenkern 3 der ersten Motorkomponente 1 hin weist. Die Trägerplatte 7 besteht ebenso wie der Eisenkern 3 aus einem Eisenwerkstoff. Die beiden Motorkomponenten 1 und 2 sind dicht nebeneinander angeordnet, so daß die Dauermagnete 6 von der Stirnseite des jeweils benachbarten Schenkels 4 des Eisenkerns 3 jeweils nur durch einen kleinen Luftspalt 8 getrennt sind. Die Breite der Luftspalte 8 wird durch zwei Blattfedern 9 vorgegeben, die jeweils seitlich am Eisenkern 3 und an der Trägerplatte 7 befestigt sind. Die Blattfedern 9 haben die Eigenschaft, daß sie sich jeweils innerhalb der von ihnen aufgespannten Ebene wie starre Körper verhalten und senkrecht dazu federnd nachgeben. Für das in Fig. 1 dargestellte Ausführungsbeispiel bedeutet dies, daß sich die beiden Motorkomponenten 1 und 2 unter Überwindung der von den Blattfedern 9 erzeugten Rückstellkraft relativ zueinander nach links und rechts bewegen können, ihr Abstand zueinander und damit auch die Breite der Luftspalte 8 dabei aber nahezu unverändert bleiben. Damit ergibt sich ein schwingungsfähiges System, bei dem die erste Motorkomponente 1 und die zweite Motorkomponente 2 jeweils eine lineare Schwingungsbewegung ausführen. Die Bewegungsrichtungen der beiden Motorkomponenten 1 und 2 sind jeweils einander entgegengesetzt, d h. die Schwingungen verlaufen gegenphasig zueinander.

Um die Schwingungsbewegung in Gang zu bringen und aufrecht zu erhalten, wird ein Stromfluß durch die Spulen 5 hergestellt. Die Spulen 5 wirken jeweils als Elektromagnet und erzeugen unterstützt durch den Eisenkern 3 ein Magnetfeld, das auf die Dauermagnete 6 einwirkt und eine Relativbewegung zwischen den Spulen 5 und den Dauermagneten 6 zur Folge hat. Durch entsprechende Ansteuerung kann das mit den Spulen 5 erzeugte Magnetfeld jeweils umgepolt werden, so daß die erste und die zweite Motorkomponente 1 und 2 in zueinander gegenphasige Schwingungen versetzt werden. Dabei besteht ein wesentlicher Aspekt der Erfindung darin, daß sich sowohl die erste Motorkomponente 1 als auch die zweite Motorkomponente 2 bewegt, d. h., daß der Linearmotor keinen Stator aufweist, mit dessen Hilfe ein Läufer angetrieben wird, sondern zwei gegeneinander schwingende Motorkomponenten 1 und 2, die sich gegenseitig antreiben. Eine dieser Motorkomponenten 1 oder 2 entspricht dem Läufer eines herkömmlichen Linearmotors. Die andere übernimmt die Funktionen des Stators eines herkömmlichen Linearmotors, ist aber im Gegensatz zu diesem nicht statisch, sondern bewegt sich ebenfalls. Dies führt unter anderem auch dazu, daß sich unter sonst gleichen Bedingungen die erste und zweite Motorkomponente 1 und 2 des erfindungsgemäßen Linearmotors mit einer Relativgeschwindigkeit zueinander bewegen, die doppelt so hoch wie die Relativgeschwindigkeit zwischen einem Stator und einem Läufer eines herkömmlichen Linearmotors ist. Dadurch läßt sich ein relativ hoher Wirkungsgrad erzielen. Die Frequenz der Schwingungsbewegung der beiden Motorkomponenten 1 und 2 wird über die Ansteuerung der Spulen 5 vorgegeben und insbesondere so eingestellt, daß sie der Resonanzfrequenz des Schwingungssystems entspricht, das durch die beiden Motorkomponenten 1 und 2 und die Blattfedern 9 gebildet wird. Unter Resonanzbedingungen ergibt sich ein sehr robustes Schwingungsverhalten und es ist lediglich eine-vergleichsweise geringe Energiezufuhr erforderlich.

Fig. 2 zeigt eine stark schematisierte Teilansicht des erfindungsgemäßen Rasierers mit dem in Fig. 1 dargestellten Ausführungsbeispiel des Linearmotors. Die Ansicht ist auf die unmittelbare Einbauumgebung des Linearmotors im Rasierer beschränkt. Der Linearmotor ist über die Blattfedern 9 an einem Gehäuse 10 des Rasierers aufgehängt, d. h. in dem dargestellten Ausführungsbeispiel übernehmen die Blattfedern 9 zusätzlich zur beweglichen Kopplung der beiden Motorkomponenten 1 und 2 untereinander die Funktion der Aufhängung des Linearmotors am Gehäuse 10. Einzelheiten zu einer möglichen geometrischen Ausgestaltung der Blattfedern 9 werden an Hand von Fig. 3 erläutert. Ein Aufhängung des Linearmotors mittels der Blattfedern 9 bietet sich deshalb an, weil sich im Gegensatz zu herkömmlichen Linearmotoren beide Motorkomponenten 1 und 2 bewegen und somit eine Verschraubung mit dem Gehäuse 10 oder eine andere starre Befestigung einer der Motorkomponenten 1 oder 2 nicht in Frage kommt. Durch die Blattfedern 9 kann eine reibungsfreie Aufhängung realisiert werden und zudem das Auftreton unerwünschter Vibrationen des Gehäuses 10 weitgehend vermieden werden. Damit der Linearmotor trotz dieser losen Aufhängung eine definierte Ruheposition einnimmt und zur Stabilisierung der Blattfedern 9 ist wenigstens eine der Blattfedern 9 über ein zusätzliches Federelement 11 mit dem Gehäuse 10 verbunden. In der Fig. 2 ist weiterhin ein Schermesser 12 dargestellt, das an der ersten Motorkomponente 1 oder an der zweiten Motorkomponente 2 angebracht ist. Alternativ dazu können auch zwei Schermesser 12 vorgesehen sein wobei das eine an der ersten Motorkomponente 1 und das andere an der zweiten Motorkomponente 2 angebracht ist. Das Schermesser 12 bzw. jedes der beiden Schermesser 12 wird von dem Linearmotor angetrieben, so daß es eine hin- und hergehende Bewegung ausführt.

**Fig.** 3 zeigt ein Ausführungsbeispiel für die Blattfeder 9 im eingebauten Zustand in Seitenansicht. Die Ansicht ist dabei so gewählt, daß die beiden Motorkomponenten 1 und 2, die durch die Blattfeder 9 verdeckt sind, senkrecht zur Zeichenebene schwingen. Die Blattfeder 9 ist bei diesem Ausführungsbeispiel kreuzförmig ausgebildet und weist einen relativ breiten horizontalen Balken 13 und einen mittig dazu angeordneten, vergleichsweise schmalen vertikalen Balken 14 auf, die einteilig miteinander ausgebildet sind. Der horizontale Balken 13 dient der Verbindung der ersten und zweiten Motorkomponente 1 und 2. Der vertikale Balken 14 dient der Aufhängung des Linearmotors am Gehäuse 10 des Rasierers und weist infolge seiner Geometrie eine wesentlich kleinere Federkonstante als der horizontale Balken 13 auf.

Das Ausführungsbeispiel der Fig. 3 weicht insofern geringfügig von den in Fig. 2 dargestellten Blattfedern 9 ab, als das zusätzliche Federelement 11 gemäß Fig. 2 in Form des unteren Abschnitts des vertikalen Balkens 14 in die Blattfeder 9 integriert ist, d. h. die Blattfedern 9 gemäß Fig. 2 benötigen diesen unteren Abschnitt nicht und können somit statt einer Kreuzform eine T-Form aufweisen. Die Befestigung am Gehäuse 10 erfolgt jeweils am unteren und am oberen Ende des vertikalen Balkens 14. Statt der mittigen Anordnung des vertikalen Balkens 14 am horizontalen Balken 13 und der dementsprechend mittigen Aufhängung des horizontalen Balkens 13 ist es auch möglich, zwei vertikale Balken 14 vorzusehen, die in den beiden Endbereichen des horizontalen Balkens 13 angeordnet sind und einer endständigen Aufhängung des horizontalen Balkens 13 am Gehäuse 10 dienen. Bei dieser Variante weist die Blattfeder 9 statt der Kreuzform eine H-Form auf. Bei der Befestigung der Blattfeder 9 am Gehäuse 10 ist dann allerdings zu berücksichtigen, daß die Schwingungsbewegungen der beiden Motorkomponenten 1 und 2 auf die vertikalen Balken 14 der Blattfeder übertragen werden.

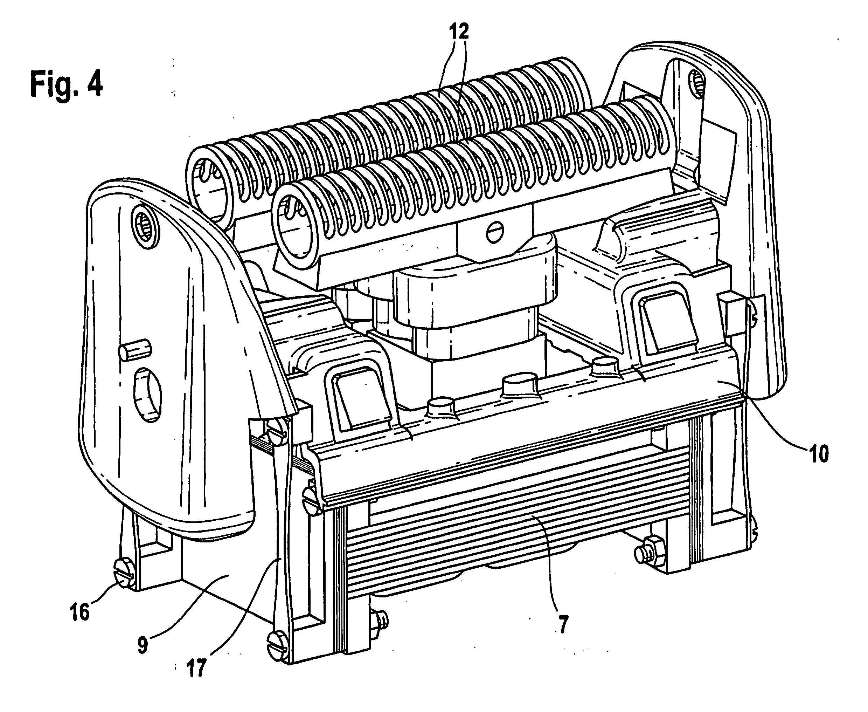

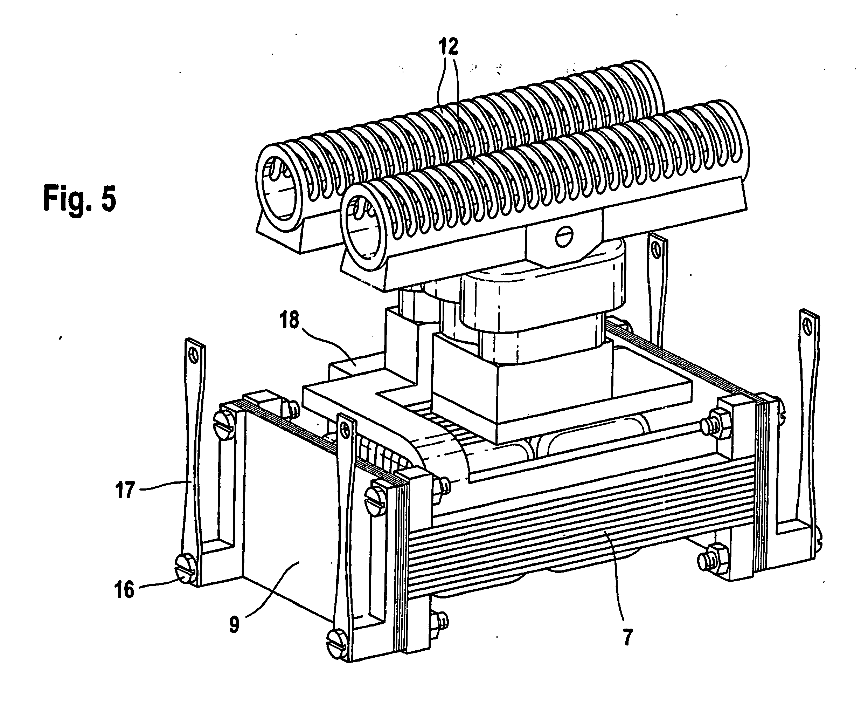

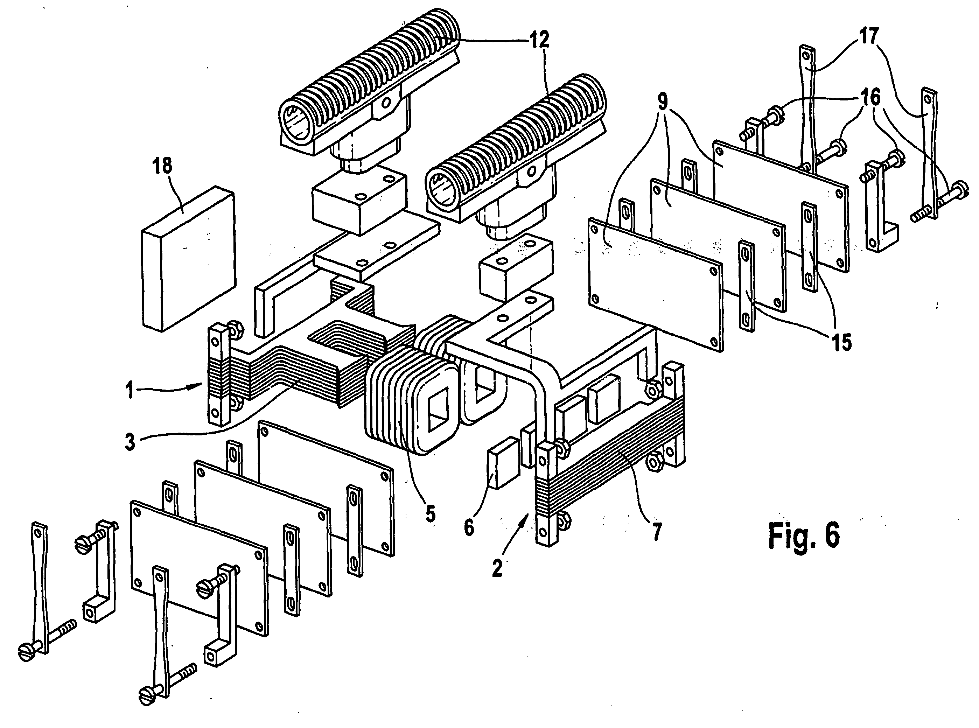

Figur 4 zeigt eine perspektivische Teilansicht eines Ausführungsbeispiels des efindungsgemäßen Rasierers in einem Fig. 2 entsprechenden Ausschnitt. Figur 5 zeigt nochmals die gleiche Darstellung wie Fig. 4, wobei allerdings einige Abdeckungen entfernt sind, so daß mehr Einzelheiten sichtbar sind. Eine zu Fig. 5 zugehörige Explosionsdarstellung ist in Fig. 6 abgebildet. Wesentlich für die Erfindung sind die in den Fig. 4 bis 6 dargestellte Ausbildung des Linearmotors und dessen Aufhängung im Rasierer. Die nicht dargestellte sonstige Ausbildung des Rasierers kann auf herkömmliche Weise erfolgen.

Die Motorkomponenten 1 und 2 entsprechen in ihrer Formgebung im Wesentlichen dem in Fig. 1 dargestellten Ausführungsbeispiel, wobei die zweite Motorkomponente 2 allerdings statt drei Dauermagneten 6 nunmehr vier Dauermagnete 6 aufweist. Auf jeder Motorkomponente 1 und 2 ist ein Schermesser 12 montiert, so daß sich die beiden Schermesser 12 gegenphasig zueinander oszillieren. Die Anordnung der Schermesser 12 auf den Motorkomponenten 1 und 2 erfolgt dabei über Kreuz, so daß das von der ersten Motorkomponente 1 angetriebene Schermesser 12 über der zweiten Motorkomponente 2 angeordnet ist und das von der zweiten Motorkomponente 2 angetriebene Schermesser 12 über der ersten Motorkomponente 1. Zusätzlich ist am Läufer 7 eine Ausgleichsmasse 18 angebracht. Dadurch soll erreicht werden, daß sich die Massenschwerpunkte der ersten Motorkomponente 1 und der zweiten Motorkomponente 2 inklusive der sich mitbewegenden Bauteile wie beispielsweise die Schermesser 12 möglichst auf einer gemeinsamen Geraden bewegen, so daß kein oder nur ein geringer resultierender Drehimpuls auftritt, der störende Vibrationen zur Folge hat. Statt je einer einzelnen Blattfeder 9 ist beiderseits des Linearmotors jeweils ein Stapel von drei rechteckig ausgebildeten Blattfedern 9 angeordnet, die jeweils durch Zwischenstücke 15 auf Abstand zueinander gehalten werden und mittels Schrauben 16 zusammengespannt und an den beiden Motorkomponenten 1 und 2 befestigt sind. Durch die Zwischenstücke 15 soll die Reibung zwischen den einzelnen Blattfedern 9 eines Stapels reduziert werden. Für die Aufhängung des Linearmotors am Gehäuse 10 sind vier separate Schwingbrücken 17 vorgesehen, die als sich bereichsweise verjüngende Streifen ausgebildet sind und in der Regel analog zu den Blattfedern 9 aus einem Federstahl gefertigt sind. An ihrem einen Ende sind die Schwingbrücken 17 jeweils gemeinsam mit den Blattfedern 9 an eine der Motorkomponenten 1 oder 2 angeschraubt. An dem jeweils anderen Ende sind die Schwingbrücken 17 mit dem Gehäuse 10 verschraubt.

Im Betriebszustand führen die beiden Motorkomponenten 1 und 2 und mit ihnen die Schermesser 12 eine zueinander gegenphasige lineare Schwingung aus. Dabei werden die beiden Stapel von Blattfedern 9 fortwährend elastisch gebogen, so daß ihre Schmalseiten jeweils in entgegengesetzter Richtung ausgelenkt werden, wobei sich die Richtung der Auslenkung periodisch umkehrt. Mit den Schmalseiten der Blattfedern 9 werden auch die daran befestigten Enden der Schwingbrücken 17 periodisch ausgelenkt. Wenn die Schwingbrücken 17, wie das im vorliegenden Ausführungsbeispiel der Fall ist, sehr schwach dimensioniert sind, werden diese Auslenkungen jedoch kaum auf das Gehäuse 10 übertragen. Allerdings können die Schwingbrücken 17 in diesem Fall auch keinen nennenswerten Drehimpuls oder linearen Impuls aufnehmen. Die Geometrie des Linearmotors ist daher so auszulegen, daß möglichst kein resultierender Drehimpuls und möglichst kein resultierender linearer Impuls auftritt. Dies kann dadurch erreicht werden daß sich der Massenschwerpunkt der ersten Motorkomponente 1 einschließlich aller sich mitbewegender Bauteile und der Massenschwerpunkt der zweiten Motorkomponente 2 einschließlich aller sich mitbewegender Bauteile entlang der gleichen Geraden bewegen. Weiterhin sollten die linearen Impulse der ersten und der zweiten Motorkomponente 1 und 2 einschließlich der sich jeweils mitbewegenden Bauteile entgegengesetzt gleich sein.

## Patentansprüche

1. Elektrisches Kleingerät mit einer Antriebseinrichtung zum Erzeugen einer oszillierenden Bewegung wenigstens einer Arbeitseinheit (12) des elektrischen Kleingeräts, wobei die Antriebseinrichtung eine erste Antriebskomponente (1), eine zweite Antriebskomponente (2) und eine Spule (5) zur Ausbildung eines Magnetfelds aufweist, das von der ersten Antriebskomponente (1) ausgeht und auf die zweite Antriebskomponente (2), die beweglich im elektrischen Kleingerät angeordnet ist, derart einwirkt, daß die zweite Antriebskomponente (2) in eine oszillierende Bewegung versetzt wird, **dadurch gekennzeichnet, daß** die erste Antriebskomponente (1) zur Ausführung einer zur zweiten Antriebskomponente (2) gegenphasig oszillierenden Bewegung beweglich im elektrischen Kleingerät angeordnet ist, wobei der Luftspalt zwischen zugeordneten Antriebskomponenten im wesentlichen konstant gehalten ist, und daß die Antriebseinrichtung mittels wenigstens eines ersten Federelements (14, 17) am elektrischen Kleingerät befestigt ist.

2. Elektrisches Kleingerät nach Anspruch 1, **dadurch gekennzeichnet, daß** die erste Antriebskomponente (1) und die zweite Antriebskomponente (2) mittels wenigstens eines zweiten Federelements (9, 13) miteinander verbunden sind.

3. Elektrisches Kleingerät nach Anspruch 2, **dadurch gekennzeichnet, daß** die Federkonstante des zweiten Federelements (9, 13) größer ist als die Federkonstante des ersten Federelements (14, 17).

4. Elektrisches Kleingerät nach einem der vorhergehenden Ansprüche, **dadurch gekennzeichnet, daß** das erste Federelement (14, 17) und/oder das zweite Federelement (9, 13) als Blattfeder ausgebildet ist.

5. Elektrisches Kleingerät nach einem der Ansprüche 2 bis 4, **dadurch gekennzeichnet, daß** das erste Federelement (14) und das zweite Federelement (13) als eine integrale Einheit ausgebildet sind.

6. Elektrisches Kleingerät nach Anspruch 5, **dadurch gekennzeichnet, daß** das erste Federelement (14) und das zweite Federelement (13) als eine gemeinsame Blattfeder in Form eines Kreuzes ausgebildet sind.

7. Elektrisches Kleingerät nach einem der Ansprüche 2 bis 4, **dadurch gekennzeichnet, daß** mehrere zweite Federelemente (9) stapelförmig übereinander angeordnet sind.

8. Elektrisches Kleingerät nach Anspruch 7, **dadurch gekennzeichnet, daß** die zweiten Federelemente (9) durch Zwischenstücke (15) auf Abstand zueinander gehalten werden.

9. Elektrisches Kleingerät nach einem der vorhergehenden Ansprüche, **dadurch gekennzeichnet, daß** ein drittes Federelement (11) zur Festlegung einer Ruheposition der Antriebseinrichtung vorgesehen ist.

10. Elektrisches Kleingerät nach einem der vorhergehenden Ansprüche, **dadurch gekennzeichnet, daß** sich die Massenschwerpunkte der ersten Antriebskomponente (1) und der zweiten Antriebskomponente (2) inklusive sich mit der ersten Antriebskomponente (1) oder der zweiten Antriebskomponente (2) mitbewegender Bauteile auf einer gemeinsamen Geraden bewegen.

11. Elektrisches Kleingerät nach einem der vorhergehenden Ansprüche, **dadurch gekennzeichnet, daß** die Impulse der ersten Antriebskomponente (1) und der zweiten Antriebskomponente (2) inklusive sich mit der ersten Antriebskomponente (1) oder der zweiten Antriebskomponente (2) mitbewegender Bauteile entgegengesetzt gleich sind.

12. Elektrisches Kleingerät nach einem der vorhergehenden Ansprüche, **dadurch gekennzeichnet, daß** wenigstens eine der beiden Antriebskomponenten (1, 2) wenigsten einen Dauermagneten (6) aufweist.

13. Elektrisches Kleingerät nach einem der vorhergehenden Ansprüche, **dadurch gekennzeichnet, daß** wenigstens eine der beiden Antriebskomponenten (1, 2) einen Wickelkem (3) aufweist, auf dem die Spule (5) angeordnet ist.

## Claims

1. A small electric appliance with a drive mechanism for generating an oscillatory motion of at least one working unit (12) of the small electric appliance, said drive mechanism having a first drive component (1), a second drive component (2), and a coil (5) for producing a magnetic field that extends from the first drive component (1) and acts on the second drive component (2) that is movably arranged in the small electric appliance, in such a way that the second drive component (2) is set in an oscillatory motion, **characterized in that** the first drive component (1) is movably arranged in the small electric appliance in order to execute an oscillatory motion in phase opposition to the second drive component (2), while the air gap between associated drive components is maintained essentially constant, and that the drive mechanism is fastened to the small electric appliance by means of at least one first spring element (14, 17).

2. The small electric appliance as claimed in claim 1, **characterized in that** the first drive components (1) and the second drive component (2) are interconnected by means of at least one second spring element (9, 13).

3. The small electric appliance as claimed in claim 2, **characterized in that** the spring constant of the second spring element (9, 13) is greater than the spring constant of the first spring element (14, 17).

4. The small electric appliance as claimed in any one of the preceding claims, **characterized in that** the first spring element (14, 17) and/or the second spring element (9, 13) is/are constructed as a leaf spring.

5. The small electric appliance as claimed in any one of the claims 2 to 4, **characterized in that** the first spring element (14) and the second spring element (13) are constructed as an integral unit.

6. The small electric appliance as claimed in claim 5, **characterized in that** the first spring element (14) and the second spring element (13) are constructed as a common leaf spring in the form of a cross.

7. The small electric appliance as claimed in any one of the claims 2 to 4, **characterized in that** several second spring elements (9) are arranged in stack form one above the other.

8. The small electric appliance as claimed in claim 7, **characterized in that** spacers (15) are provided to maintain the second spring elements (9) in spaced relation to each other.

9. The small electric appliance as claimed in any one of the preceding claims, **characterized in that** provision is made for a third spring element (11) to define a position of rest for the drive mechanism.

10. The small electric appliance as claimed in any one of the preceding claims, **characterized in that** the mass centers of gravity of the first drive component (1) and of the second drive component (2), including parts co-moving with the first drive component (1) or the second drive component (2), move on a common straight line.

11. The small electric appliance as claimed in any one of the preceding claims, **characterized in that** the momentums of the first drive component(1) and of the second drive component (2), including parts co-moving with the first drive component (1) or the second drive component (2), are opposite and equal.

12. The small electric appliance as claimed in any one of the preceding claims, **characterized in that** at least one of the two drive components (1, 2) has at least one permanent magnet (6).

13. The small electric appliance as claimed in any one of the preceding claims, **characterized in that** at least one of the two drive components (1, 2) has a core (3) around which the coil (5) is wound.

## Revendications

1. Petit électroménager équipé d'un dispositif d'entraînement en vue de la génération d'un mouvement oscillatoire d'au moins une unité de travail (12) du petit électroménager, dans lequel le dispositif d'entraînement présente un premier composant d'entraînement (1), un second composant d'entraînement (2) et une bobine (5) en vue de la génération d'un champ magnétique, qui provient du premier composant d'entraînement (1) et agit sur le second composant d'entraînement (2), qui est disposé mobile dans le petit électroménager, de sorte que le second composant d'entraînement (2) est déplacé selon un mouvement oscillatoire, **caractérisé en ce que** le premier composant d'entraînement (1) est disposé mobile dans le petit électroménager en vue de la génération d'un mouvement oscillatoire en opposition de phase vers le second composant d'entraînement (2), dans lequel l'entrefer entre les composants d'entraînement associés est maintenu sensiblement constant, et **en ce que** le dispositif d'entraînement est fixé au petit électroménager au moyen d'au moins un premier amortisseur (14, 17).

2. Petit électroménager selon la revendication 1, **caractérisé en ce que** le premier composant d'entraînement (1) et le second composant d'entraînement (2) sont reliés l'un à l'autre au moyen d'au moins un second amortisseur (9, 13).

3. Petit électroménager selon la revendication 2, **caractérisé en ce que** la constante de raideur du second amortisseur (9, 13) est supérieure à la constante de raideur du premier amortisseur (14, 17).

4. Petit électroménager selon l'une des revendications précédentes, **caractérisé en ce que** le premier amortisseur (14, 17) et/ou le second amortisseur (9, 13) est réalisé sous la forme d'un ressort à lame.

5. Petit électroménager selon l'une des revendications 2 à 4, **caractérisé en ce que** le premier amortisseur (14) et le second amortisseur (13) sont réalisés sous la forme d'une unité intégrale.

6. Petit électroménager selon la revendication 5, **caractérisé en ce que** le premier amortisseur (14) et le second amortisseur (13) sont réalisés en tant que ressort à lame commun sous la forme d'une croix.

7. Petit électroménager selon une des revendications 2 à 4, **caractérisé en ce que** plusieurs seconds amortisseurs (9) sont disposés les uns au-dessus des autres sous forme empilée.

8. Petit électroménager selon la revendication 7, **caractérisé en ce que** les seconds amortisseurs (9) sont maintenus éloignés les uns des autres par des pièces intermédiaires (15).

9. Petit électroménager selon l'une des revendications précédentes, **caractérisé en ce qu'**un troisième amortisseur (11) est prévu en vue de la définition d'une position de repos du dispositif d'entraînement.

10. Petit électroménager selon l'une des revendications précédentes, **caractérisé en ce que** les centres de gravité du premier composant d'entraînement (1) et du second composant d'entraînement (2) y compris des composants mobiles associés au premier composant d'entraînement (1) ou au second composant d'entraînement (2) se déplacent sur une droite commune.

11. Petit électroménager selon l'une des revendications précédentes, **caractérisé en ce que** les impulsions du premier composant d'entraînement (1) et du second composant d'entraînement (2) y compris des composants mobiles associés au premier composant d'entraînement (1) ou au second composant d'entraînement (2) sont opposées.

12. Petit électroménager selon l'une des revendications précédentes, **caractérisé en ce qu'**au moins un des deux composants d'entraînement (1, 2) présentent au moins un aimant permanent (6).

13. Petit électroménager selon l'une des revendications précédentes, **caractérisé en ce qu'**au moins un des deux composants d'entraînement (1, 2) présentent un axe d'enroulement(3), sur lequel est disposée la bobine (5).
